# EUROPEAN PATENT APPLICATION

(11) **EP 1 209 791 A2**
(43) Date of publication of application: **29.05.2002**
(21) Application number: 01660205.4
(22) Date of filing: 14.11.2001
(51) Int. Cl.: H02J 7/02, H02M 3/28

(54) **Power supply arrangement and inductively coupled battery charger with wirelessly coupled control, and relative method**

(30) Priority: 14.11.2000 FI 20002493
(71) Applicant: Salcomp OY, 98310 Kemijärvi (FI)
(72) Inventor: Brockmann, Hans-Jürgen, 25130 Muurla (FI)
(74) Representative: Brax, Matti Juhani

(57) **Abstract**

A power supply arrangement comprises a primary side and a secondary side. There is a power transformer between the primary side and the secondary side. On the primary side certain switching means are arranged to repeatedly switch, at a certain frequency, an electric current coupled into the power transformer for cyclically transferring energy from the primary side to the secondary side at said certain frequency. A wireless feedback link exists between the primary side and the secondary side. On the secondary side there are feedback pulse generating means for generating feedback pulses at a certain frequency to be transferred from the secondary side to the primary side over the wireless feedback link. On the primary side there are means for utilizing the feedback pulses in controlling the rate at which energy is transferred from the primary side to the secondary side. The feedback pulse generating means are arranged to generate the feedback pulses at a frequency that is different from the frequency used by the switching means at the primary side to repeatedly switch an electric current coupled into the power transformer.

## Description

The invention concerns generally the technology of controlling the operation of switched-mode power supplies. Especially the invention concerns the problems that are encountered when the operation of an inductively coupled switched-mode power supply is to be controlled with a control signal that hops wirelessly over a certain distance on its way.

In general, switched-mode power supplies cover all such embodiments of voltage level conversion and/or regulation where a chopped DC voltage is fed by a primary circuit into an inductive component so that energy is alternatingly stored into a magnetic field and discharged therefrom into a secondary circuit that comprises rectifying and filtering components. In this patent application we discuss inductively coupled switched-mode power supplies: this means that there is no wired connection for transferring energy from the primary side to the secondary side. Especially we discuss a certain application of inductively coupled switched-mode power supplies, namely battery chargers where the principal load coupled to the secondary side is a rechargeable battery. However, the principles of the invention are equally applicable also to other applications of inductively coupled switched-mode power supplies, so in order not to limit the description inappropriately we use the general designation "power supply".

The concept of controlling the operation of such a power supply means that the rate at which energy is transferred from the primary to the secondary is adjusted according to need. Ultimately it is the output current and output voltage of the power supply that must behave in a certain way, so most controlling principles involve measuring either the output voltage or the output current or both. On the basis of this measurement there is formed a control signal of some kind. This control signal is then conveyed to the primary side, which uses it to change the chopping duty cycle or some other functional characteristic of the primary circuit.

A specific approach to the controlling task is known from EP 0 232 915 B1, which is incorporated herein by reference. Fig. 1 provides a simplified illustration of the approach. An AC input voltage is filtered and rectified in an appropriate filtering and rectifying block 101. The resulting rectified voltage is chopped by using two power transistors T1 and T2. Together with the auxiliary circuitry that consists of diodes D2, D3, D4 and D5, capacitors C1 and C2 and inductor L1, the switching transistors T1 and T2 cause cyclically repeated changes in the primary current of the power transformer M1. On the secondary side a rectifying, filtering and regulating block 102 repeatedly discharges energy from the magnetic field of the power transformer and converts it into at least one DC output voltage according to the known principle of switched-mode power supplies. The power transformer M1 may have multiple secondary windings for producing multiple output voltages.

According to the control principle disclosed in EP 0 232 915 B1 there is a coupling from the rectifying, filtering and regulating block 102 to a PWM (Pulse Width Modulation) controller 103, which is typically a simple, reliable controller such as the well-known SG 3524. Its task is to map the measured output characteristics (voltage and/or current) into a specific duty cycle that should be used in chopping the rectified and filtered input voltage on the primary side. The PWM controller 103 produces output pulses at the appropriate frequency and duty cycle. A driver circuit 104 that is coupled between the PWM controller 103 and one winding of a feedback transformer M2 conveys said pulses to the feedback transformer M2. There is one pickup winding in the feedback transformer M2 for each of the power transistors T1 and T2. Together with the diode-zener couplings D6-D7 and D8-D9 and the RC filters R1-C3 and R2-C4 the pickup windings shape the pulses that come over the feedback transformer M2 so that they can be coupled to the gates of the power transistors T1 and T2.

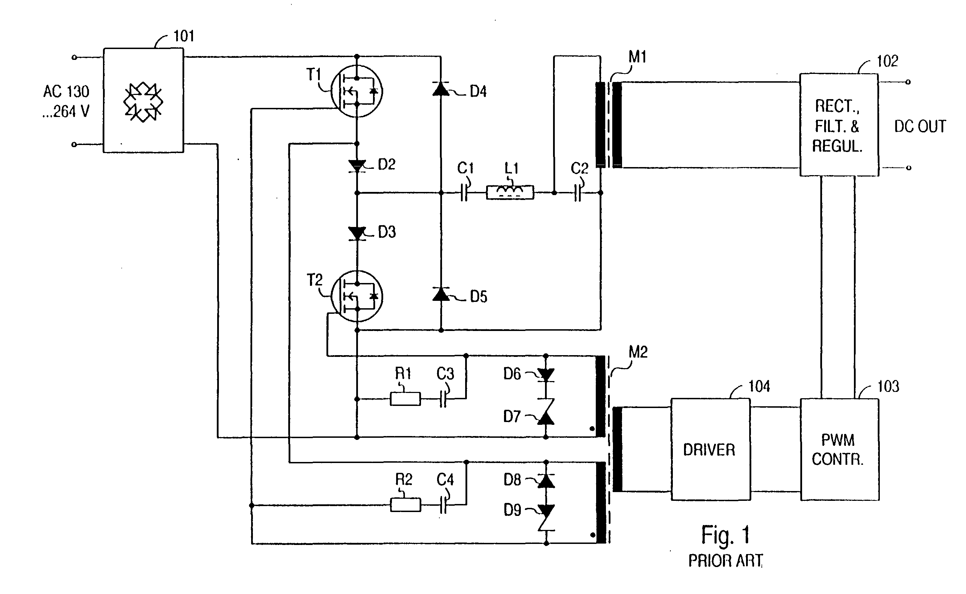

The above-described principle of placing the PWM controller onto the secondary side of the power supply has many advantages. They become even more apparent in an inductive charger application. Let us assume that the rectifying, filtering and regulating block 102, the PWM controller 103 and the driver 104 as well as the right-hand side windings of the transformers M1 and M2 are located in a battery-powered portable electronic device such as a portable computer or the mobile station of a cellular radio network. The rest of the circuitry shown in fig. 1 is then located in a charger device where a power cord serves to couple the input of the filtering and rectifying block 101 to a wall socket. Only when the portable electronic device is placed appropriately into the immediate vicinity of the charger device (e.g. pressed into a receptive cradle or socket), the windings of the transformers come close enough to each other so that the transformer functionality becomes a reality.

In the above-described arrangement the portable electronic device retains good control over the charging of its own battery: the measurement of the output voltage and/or current of the power supply takes place very close to the actual load, which helps to avoid such error sources as long wired connections (for example in many other known mobile telephone chargers all control functions are located in a housing that is integrated with a mains plug, and a low-voltage cord links this housing to the actual device to be charged). Another advantage is that the manufacturer of the portable electronic device, which a consumer will hold liable if improper charging control destroys the battery, does not have to rely on the supplier of the chargers in all control-related matters. Also other advantages exist that are related to the optimisation of electromechanical structures, circuit design and dimensioning as well as avoidance of losses. As an example of the last-mentioned we may note that in arrangements where charge control is otherwise not located within the portable electronic device, there is typically a switch close to the battery that starts chopping the charging current when the battery is nearly full. The switch causes losses that in the arrangement of fig. 1 are avoided because the only switch that is potentially needed is an ON/OFF-type safety switch (not shown in fig. 1) which stops the charging altogether if something unusual is detected in the charging process.

However, the approach illustrated in fig. 1 has one fundamental flaw. Portable electronic devices such as mobile phones become smaller and smaller, which means that the dimensions of the mechanical interface between such a device and a charger cannot be very large. This in turn means that the transformers M1 and M2 must be placed relatively close to each other. Even if measures are taken to provide appropriate electromagnetic shielding, one cannot completely avoid interactions between the magnetic fields of the transformers. The electric power that is transferred from the primary side over the power transformer M1 to the secondary side is much larger than that transferred in the opposite direction over the feedback transformer M2. Consequently the interactions between the magnetic fields become mainly visible so that the transferring of pulse width modulated control pulses from the secondary side to the primary side is seriously disturbed, which leads into unreliability in operation.

It would be possible to use some other form of wireless coupling to transfer the pulse width modulated pulses from the secondary side to the primary side in order to avoid magnetic interactions. For example, one might use an infra-red-coupled or capacitively coupled short-distance wireless link. However, only very small amounts of actual power can be transferred using these techniques, which means that the pulses would hardly be powerful enough to be used as the gate voltage pulses of power transistors. Additionally there are unreliability factors such as scratches and dirt on the lenses through which an infra-red signal should be transmitted, as well as the ageing of such components as infra-red emitting diodes and infra-red sensitive phototransistors.

It is an object of the invention to provide a power supply arrangement and a corresponding inductive charger where the problem of wireless feedback is solved without the above-mentioned drawbacks of prior art. It is also an object of the invention to provide a method for controlling the operation of such a power supply arrangement and a corresponding inductive charger.

The objects of the invention are achieved by using a different frequency in the feedback transformer than in the power transformer.

A power supply arrangement according to the invention is characterised in that what is said in the independent claim directed to a power supply arrangement.

The invention applies also to a battery charger that is characterised in that what is said in the independent claim directed to a battery charger.

The invention applies also to a battery-powered portable electronic device, which is characterised in that what is said in the independent claim directed to a battery-powered portable electronic device.

Additionally the invention applies to a method for controlling a power supply arrangement. The method is characterised in that what is said in the independent claim directed to such a method.

The invention relies on the observation that the majority of electromagnetic interference between two closely-located transformers is due to mutual excitation on a certain common frequency. According to the invention, different frequencies are used in the transformers. Filtering arrangements with suitable frequency responses can then be used in association with at least one of the transformers, so that the operational frequency of each transformer passes through with minimal attenuation while any "foreign" frequency components that result from the unwanted electromagnetic coupling with the other transformer are rejected by the filtering arrangement. Typically a filtering arrangement is only needed in association with the feedback transformer, because the main propagation direction of interference is from the power transformer to the feedback transformer.

In the known arrangement described in the description of prior art it would have been impossible to use different frequencies in the transformers, because the pulses that come over the feedback transformer are used as such as the gate voltage pulses of the switching transistors. A direct consequence of certain frequency as the frequency of the gate voltage pulses is the appearance of current pulses in the primary winding of the power transformer at the same frequency. According to the invention this dilemma is solved by not using the feedback pulses as the gate voltage pulses of the switching transistors. The switching transistors constitute a part of a self-oscillating switching block the self-sustained frequency of which is something else than that of the pulses that come over the feedback transformer. The feedback pulses drive another part of the primary circuit that in turn controls the amount of power that the self-oscillating switching block pumps into the power transformer. Most advantageously this "another part of the primary circuit" is a pre-regulator that is in itself a switched-mode power supply and produces a variable output voltage as a function of the duty cycle (or some other variable characteristic) of the feedback pulses. This variable output voltage is given as an input voltage to the self-oscillating switching block.

It is advantageous to complement the above-explained basic operational principle with several auxiliary functions in order to enhance the practical usability of the power supply arrangement. An amplifying arrangement is most advantageously used to amplify the pulses that have been transferred over the feedback amplifier. The amplifier arrangement can comprise several amplifier stages that are distributed along the signal path from the feedback transformer to the place of utilizing the pulses (e.g. the pre-regulator). A threshold stage can be used together with said amplifying arrangement: the threshold stage ensures that only large-amplitude voltage swings are taken into account as the rising and falling edges that define the pulses, while high-frequency ringing is tuned out. Other useful auxiliary functions are automatic gain control to account for small physical alignment errors that would otherwise cause variations in pulse amplitude, an amplitude limiter that does not allow the amplitude of the pulses to grow beyond a certain limit, and an off-signal generator that detects a situation where no feedback pulses are coming at all and switches off all functions that are not needed in such a case.

If a switched-mode power supply is used as the pre-regulator, one must ensure that it starts operating correctly in a power-up situation and at the moment when a portable electronic device is brought close enough to the charger so that coupling occurs. We must note that feedback pulses start to flow from the secondary side to the primary side only after some power has already been transferred over the power transformer, and this "start-up" power has to be generated in a controlled manner on the primary side. Most advantageously there is a simple start-up oscillator on the primary side that provides the pre-regulating switched-mode power supply with start-up switching pulses until the feedback pulses come through clearly enough, after which the feedback pulses substitute the start-up switching pulses in the task of controlling the pre-regulating switched-mode power supply. Additionally there may be a very low frequency "starter engine" oscillator that generates starting attempt pulses during a state where feedback pulses are not detected and the charger is generally off.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.
- Fig. 1: illustrates a known functional principle for an inductive charger arrangement,
- Fig. 2: illustrates a functional principle according to the invention,
- Fig. 3: illustrates a block diagram of a primary side of a power supply arrangement according to an embodiment of the invention,
- Fig. 4: illustrates a block diagram of a secondary side of a power supply arrangement according to an embodiment of the invention and
- Figs. 5a to 5d: illustrate a circuit diagram of a primary side of a power supply arrangement according to an embodiment of the invention.

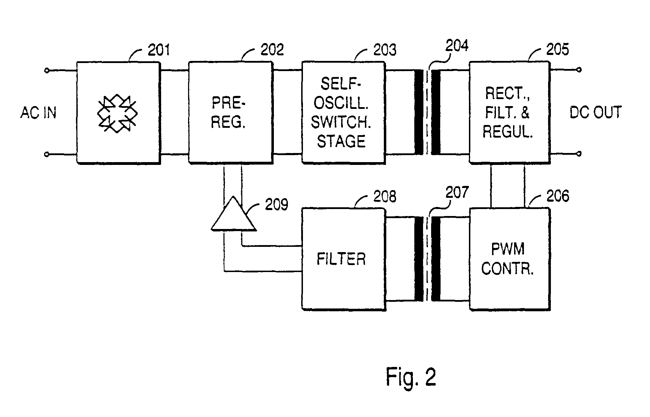

Fig. 1 was described previously in the description of prior art, so the following description of the invention and its advantageous embodiments will focus on figs. 2 to 5d.

Fig. 2 is a simplified block diagram that illustrates the most significant part of an inductive charger arrangement according to an embodiment of the invention. An AC supply voltage is brought into the input of a filtering and rectifying block 201 the task of which is to rectify the AC voltage and to prevent electromagnetic interference from entering from the AC mains supply to the inductive charger arrangement and equally to prevent electromagnetic interference generated within the inductive charger arrangement from propagating into the AC mains supply. The output of the filtering and rectifying block 201 is coupled to the input of a controllable pre-regulator 202 the task of which is to controllably convert the rectified supply voltage to another voltage. Said other voltage is led into a self-oscillating switching stage 203 the input of which is coupled to the output of the controllable pre-regulator 202. The output of the self-oscillating switching stage 203 is in turn coupled to the primary winding of a power transformer 204.

A secondary winding of the power transformer 204 is coupled to a rectifying, filtering and regulating block 205 the task of which is to cyclically discharge energy from the magnetic field of the power transformer 204 and to convert it into a DC output voltage. From the rectifying, filtering and regulating block 205 there is a measurement coupling to a PWM controller 206; the measurement coupling conveys to the PWM controller 206 certain measured values that are related to the DC output voltage and/or output current of the rectifying, filtering and regulating block 205. A PWM output of the PWM controller 206 is coupled to a first winding of a feedback transformer 207. A second winding of the feedback transformer 207 is coupled to the input of a filter 208. The filter 208 has a certain frequency response, which will be described in more detail later. From the output of the filter 208 there is a coupling through an amplifier 209 to a control input of the controllable pre-regulator 202.

Note that the transformers 204 and 207 need not be conventional transformers in the sense that the primary and secondary windings would have a well-defined constant physical relation (for example so that in each transformer the primary and secondary windings would be wound around a common core). For two or more windings to function as a transformer it suffices that they are close enough to each other to allow energy to be transferred between them through an electromagnetic field. Indeed in an exemplary embodiment of the invention which will be described in more detail later the windings of the transformers are located in mechanically separate entities so that the distance between a primary and a secondary winding as well as the relative directions of the windings depend heavily on the mechanical tolerances that are used in manufacturing said entities.

The inductive charger arrangement that is schematically illustrated in fig. 2 operates as follows. The filtered and rectified output voltage of block 201 is brought as the input supply voltage to the controllable pre-regulator 202. The output voltage of the controllable pre-regulator 202 varies as a function of the duty cycle of a pulsed control signal that is brought into its control input. The self-oscillating switching stage 203 receives this variable output voltage of the controllable pre-regulator 202 as an input voltage that it uses as a source of the energy that it pumps cyclically to the magnetic field of the power transformer 204. The switching frequency or duty cycle of the self-oscillating switching stage 203 are not controlled by anything else than the selection of the component values that are used in its implementation. Such a self-oscillating switching stage is also referred to as (the primary part of) a resonant switched-mode power supply, because under steady-state conditions the switching frequency and duty cycle acquire certain essentially constant values that are determined by the resonance characteristics of the circuit.

Even if the switching frequency or duty cycle of the self-oscillating switching stage 203 are not controlled, it has been found that the amount of energy per unit time that it pumps into the magnetic field of the power transformer 204 is an essentially unambiguous function of the input voltage of the self-oscillating switching stage 203. Remembering that the output voltage of the controllable pre-regulator 202 was in turn a function of the duty cycle of a pulsed control signal that is brought into its control input, we may say that as a whole the controllable pre-regulator 202 and the self-oscillating switching stage 203 constitute the primary side of a PWM-controlled switched-mode power supply where the frequency of the PWM control pulses is not necessarily the same as the switching frequency at which power is pumped into the magnetic field of the power transformer 204. Below we will show that it is essential to the invention that these frequencies are different.

As was described earlier and as is even obvious to the person skilled in the art, on the secondary side the rectifying, filtering and regulating block 205 cyclically discharges energy from the magnetic field of the power transformer 204 at a frequency that is equal to that at which energy is pumped thereto by the primary side. The measurement performed by or for the PWM controller 206 may concern directly the DC output voltage and/or output current of the rectifying, filtering and regulating block 205, but this is not essential: a measurement of a quantity the value of which has a certain unambiguous relation to said DC output voltage and/or output current would do as well, as long as the PWM controller 206 has been programmed so that it interprets such unambiguous relation correctly. In general we may state that certain voltage/current characteristics have been programmed into the PWM controller 206, and the PWM controller 206 varies the duty cycle of its output pulses so that the measured quantity would show that the DC output voltage and/or output current follows said voltage/current characteristics as closely as possible. In a very simple example the PWM controller 206 tries to keep the DC output voltage at a certain predefined level: if the measurement shows that the DC output voltage is below said level the duty cycle is increased, and correspondingly if the measurement shows that the DC output voltage is above said level the duty cycle is decreased.

The frequency at which the PWM controller 206 gives its PWM output pulses is typically also a programmable value. According to the invention this frequency is selected so that it is different than the resonant switching frequency of the self-oscillating switching stage 203. Below we will give a detailed analysis on how far from each other the frequencies should most advantageously be.

The PWM output pulses are transferred over the feedback transformer 207 back to the primary side. The frequency response of the filter 208 has been selected so that it defines a first range of frequencies to be passed and a second range of frequencies to be blocked. According to the invention the frequency at which the PWM controller 206 gives its PWM output pulses must be within the first range and the resonant switching frequency of the self-oscillating switching stage 203 must be within the second range. In other words, the PWM pulses, which at this part of the circuit may also be designated as the feedback pulses, pass through the filter 208 while any spurious signals that result from electromagnetic coupling between the transformers 204 and 207, which occurs mainly at the switching frequency of the self-oscillating switching stage 203, are strongly attenuated. After filtering the "decontaminated" PWM pulses are amplified in the amplifier arrangement 209 and provided to the control input of the controllable pre-regulator 202.

The distance in frequency units at which the frequency of the PWM output pulses from the PWM controller 206 must be from the resonant switching frequency of the self-oscillating switching stage 203, as well as the relative magnitudes of the frequencies, are affected by several factors. We may first discuss the latter issue. It is a known fact that the use of PWM control in a switched-mode power supply tends to set, at least at the priority date of this patent application, an upper limit to the usable range of switching frequencies. Usability in this sense means that the generation and handling of PWM pulses at the required accuracy becomes difficult, and remarkable switching losses are unavoidable, if the switching frequency becomes very high. On the other hand it is also known that self-oscillating switched-mode power supplies can operate efficiently at remarkably higher switching frequencies than PWM-controlled ones. Additionally the physical size of a power transformer used in a switched-mode power supply is an essentially decreasing function of increasing switching frequency, while the physical size of any transformer is an increasing function of the power that is to be transferred over it. All these considerations taken together with the fact that only a small power needs to be transmitted over the feedback transformer suggest that it is more advantageous to make the resonant switching frequency of the self-oscillating switching stage 203 higher than the frequency of the PWM output pulses from the PWM controller 206 than the other way round. However, it should be noted that the invention does not literally require that the relative magnitudes of the frequencies are selected in this way: at least theoretically it is possible to make the resonant switching frequency of the self-oscillating switching stage 203 lower than the frequency of the PWM output pulses from the PWM controller 206.

Another issue is the distance in frequency units at which the frequencies must be from each other. This is mainly determined by such factors as the magnitude of cross-coupling between the transformers 204 and 207 in relation to the internal coupling efficiency of each transformer alone, as well as the sharpness of the pass band limit of the filter 208. Let us briefly reduce the general description of the invention to one practical embodiment, which is the one where a portable electronic device, that houses the blocks 205 and 206 as well as the right-hand side windings of the transformers 204 and 207, is placed into a receptive socket of a charger that houses the rest of the parts shown in fig 2. In this mechanical arrangement the mechanical features of the portable electronic device and the charger determine, how close the transformer windings come within each transformer alone as well as to each other between transformers. Once the mechanical design of the devices has been finalized, it is possible to search for a balance between the difference of frequencies and the complexity of the filter 208. A rule of thumb is that the closer the frequencies are to each other, the higher must be the order of the filter 208 in order to make the edge of the pass band sharp enough to provide enough attenuation of the unwanted frequency components. In the research work that led to the present invention an exemplary circuit was built where the resonant switching frequency of the self-oscillating switching stage 203 is about 25 times the frequency of the PWM output pulses from the PWM controller 206 and the air gap per leg in an U-cored power transformer 204 (i.e. the distance between the core halves) is 2.6 mm. An n-sectional linear passive LRC low pass chain filter of the (2n+1)th order was found to be sufficient where n=1 if the axial distance between the cylindrical windings of the feedback transformer 207 is not larger than 5 mm and n=2 if said axial distance is not larger than 12.5 mm. The inductances of the windings of the feedback transformer were 4.7 mH on the side of the PWM controller 206 and 1 mH on the side of the filter 208. It is possible to experiment with the values of the above-mentioned quantities in order to find other working combinations. Later improvements in the low pass filter combined with a simple technique of doubling the frequency of the feedback pulses, which will be described later in more detail, suggest that the resonant switching frequency of the self-oscillating switching stage need not be more than 6 times the frequency of the feedback pulses to achieve completely satisfactory results.

The physical implementation of the windings that constitute the transformers deserves some consideration. In the exemplary coupling referred to previously each half of the power transformer had an U-core. The primary core had a 9 mm external width between the U legs, a total length of 5 mm for each leg from the bottom of the core, and a thickness of 3 mm. The dimensions of the secondary core were otherwise the same but the total length of the legs was slightly smaller. The primary and secondary windings both consisted of two separate windings, each being wound around a U leg of its own as close to the open end of the leg as possible. The U cores were placed so that the open ends of the U legs faced each other at a distance of 2.6 mm. Each winding of the feedback transformer was wound as a cylindrical coil around a ferrite rod having a thickness of approximately 0.8 mm. The ferrite rods were placed parallel to each other at an orthogonal axial displacement and a variable axial distance in the range of 3 to 12 mm. The direction of the ferrite rods was parallel to the direction of the bottom parts of the U cores in the power transformer, which means that the feedback windings were placed orthogonally against the direction of the power transformer coils. Alternative physical implementations exist for the transformers: for example one might consider placing cylindrical feedback coils on the same straight line so that their central axes would coincide, or one might use E cores for the power transformer so that the actual power transformer coils would be wound around the peripheral legs and the feedback coils would be wound around the center legs of the cores, with the open ends of the legs of the E cores facing each other in the transformer arrangement.

In general we may assume that the PWM pulse train that is to be transferred over the feedback transformer does not comprise, at least not intentionally, a DC component. This means that the filter 208 does not need to be of a low-pass type. It may well be of a band-pass type with a relatively wide pass band. The requirement for the width of the pass band comes from the fact that basically we want to transfer essentially rectangular pulses, which means that it is not enough to pass the fundamental PWM frequency but a number of its harmonics must be passed as well. It may be even advantageous to use a band-pass filter instead of a low-pass one especially if we want to intentionally reject any spurious DC components.

Up to this point we have solely referred to the component that implements the short-distance wireless feedback connection as a transformer. Basically this is not a limitation: other kinds of short-distance wireless links such as capacitive transfer, an infrared transmitter-receiver pair or an optocoupler could be used as well. Some of these alternative embodiments gain remarkable advantage from the use of a band-pass filter instead of a low-pass one, because for example an infrared link is vulnerable to external low-frequency interference from the sun, artificial lighting and other known error sources.

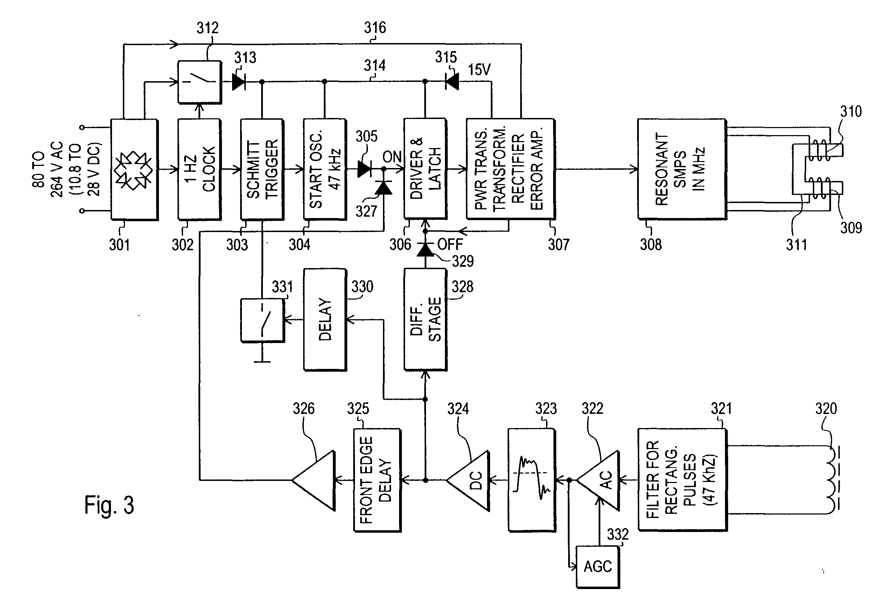

Next we will describe the addition of certain advantageous auxiliary features to the simplified principle described in fig. 2. The block diagram of Fig. 3 illustrates the primary side of an inductive charger arrangement according to an embodiment of the invention. In other words, functional blocks that correspond to blocks 201, 202, 203, 208 and 209 of fig. 2 are shown in addition to said advantageous auxiliary features. Also the left-hand sides of the transformers designated as 204 and 207 in fig. 2 are represented in fig. 3. In yet other words, in our example concerning a portable electronic device placed into a receptive socket of a charger, fig. 3 illustrates those parts that are located in the charger.

A supply voltage generating block 301 takes 80...264 V AC or 10.8...28 V DC as an input voltage. For the purposes of simplifying the following description we may assume so far that the AC input voltage range is used. An output of the supply voltage generating block 301 is coupled to the input of a very low frequency clock 302; the frequency of 1 Hz is given in fig. 3 as an example. An output of the very low frequency clock 302 is coupled to the series coupling of a Schmitt trigger 303, a start oscillator 304 with an exemplary oscillating frequency of 47 kHz, a diode 305, a driver and latch block 306 and a pre-regulator 307, of which the latter is in fig. 3 shown to comprise a power transistor, a transformer, a rectifier and an error amplifier. An output of the pre-regulator is coupled to the supply voltage input of a resonant switched-mode power supply 308 the outputs of which are in turn coupled to two windings 309 and 310 on an U-shaped core 311 of a power transformer.

From the supply voltage generating block 301 there is also a coupling, through a controllable switch 312 and a diode 313 to an auxiliary supply voltage rail 314. A reversely biased diode 315 couples the auxiliary supply voltage rail 314 to the pre-regulator 307. The Schmitt trigger block 303, the start oscillator block 304 and the driver and latch block 306 are all coupled to the auxiliary supply voltage rail 314. Further there is a high-voltage supply rail 316 that links the supply voltage generating block 301 essentially directly with the pre-regulator 307.

At the lower part of fig. 3 there is the pickup winding 320 of a feedback transformer. This winding is coupled to a filter 321. The output of the filter 321 is coupled, through an AC amplifier 322, to a thresholding block 323. The output of the thresholding block 323 is coupled to the signal input of a DC amplifier 324. From the output of the DC amplifier 324 there are several signal paths, one of which goes through a front edge delay block 325, an additional amplifier 326 and a diode 327 to a point between diode 305 and the driver and latch block 306. Another signal path from the output of the DC amplifier 324 goes through a differentiation stage 328 and a diode 329 to a control input called the OFF input of the driver and latch block 306. From the pre-regulator 307 there is also a coupling to this control input of the driver and latch block 306. Yet another signal path from the output of the DC amplifier 324 goes through a delay block 330 to the control input of a controllable switch 331. This controllable switch 331 couples a control input of the Schmitt trigger block 303 to a fixed potential, which here is the ground potential.

In the following description of the operation of the arrangement shown in fig. 3 we will begin by explaining the operation during charging. In other words we assume that there is at least one secondary winding in the immediate vicinity of the power transform primary windings 309 and 310 that discharges energy from the magnetic field of the power transformer, and that there exists a PWM controller that delivers pulse width modulated feedback pulses that are electromagnetically coupled to the feedback winding 320 shown in fig. 3. In such an operational state, before any changes to the operational conditions occur, the very low frequency clock 302, the Schmitt trigger 303, the start oscillator 304 and the auxiliary supply voltage rail 314 have little significance. The supply voltage generating block 301 generates a supply voltage, and the supply voltage rail 316 conducts it into the pre-regulator 307. The latter converts the supply voltage into a variable input voltage for the resonant switched-mode power supply 308, which in turn chops said variable input voltage in order to cyclically pump, through the primary windings 309 and 310, energy into the magnetic field of the power transformer. The resonance frequency of the resonant switched-mode power supply 308 is typically in the order of MHz; in the research work that led to the present invention a value of approximately 1.2 MHz was used, with values from 1.16 MHz to 1.6 MHz tested to show little practical significance to the key issues of the invention.

During charging, pulse width modulated feedback pulses keep coming from the secondary side that is not shown in fig. 3. These are picked up by the pickup winding 320 and coupled to the filter 321. In the research work case described above the pulse frequency of the feedback pulses was initially 47 kHz, but successful experiments were performed with feedback pulse frequencies of up to 200 kHz. The task of the filter 321 is to remove from the signal coming from the pickup winding 320 all high-frequency interference resulting from the power transformer, however so that the rectangular form of the feedback pulses is at least approximately preserved. Therefore an upper cut-off frequency of the filter 321 must lie considerably higher on the frequency axis than said feedback pulse frequency: experiments have shown that with the frequencies as given above, an upper cut-off frequency in the range of 600 - 800 kHz works reasonably well. The filter 321 may be a low-pass filter having only said upper cut-off frequency, or a band-pass filter in which case the lower cut-off frequency (the lower limit of the pass band) must lie below the pulse frequency of the feedback pulses.

The filtered output of the filter 321 is amplified in the AC amplifier 322, which has most advantageously an automatic gain control amplification factor; this is illustrated schematically as the AGC block 332. The amplified pulses are taken to the thresholding block 323 the task of which is to reject residual ripple: a voltage swing from a level that is well below a threshold level to another level that is well above said threshold level is interpreted as the beginning of a pulse, whereas a corresponding voltage swing in the other direction is interpreted as the end of a pulse. At the output of the thresholding block 323 the pulse width modulated feedback pulses should therefore appear essentially in the same form as the one they had at the output of the PWM controller on the secondary side (not shown in fig. 3).

From the output of the thresholding block 323 the leading and trailing edges of the feedback pulses are handled separately. The pulses as such are coupled both to the front edge delay block 325 and to the differentiation stage 328, but the couplings from the front edge delay block 325 through the amplifier 326 and diode 327 to the "ON" input of the driver and latch block 306 on one hand and from the differentiation stage 328 through the diode 329 to the "OFF" input of the driver and latch block 306 on the other hand are arranged so that only the leading (rising) edges of the pulses have an effect that is conveyed through the first-mentioned route and the trailing (falling) edges of the pulses have an effect that is conveyed through the last-mentioned route. The leading edges are slightly delayed in the front edge delay block 325. The reason thereto is the fact that the PWM controller that was used in the experimental coupling produces pulses at least at a minimum duty cycle of about 0,05. This is related to the upper bandpass limiting frequency of the filter 321; it is not possible to transfer needle pulses. However, the pre-regulator needs a wide range of PWM signals with duty cycles from practically zero to a certain maximum value. In the experimental coupling it was meant that the duty cycle could go all the way to zero (no pulses at all) if needed, and this was accomplished by delaying the leading edge of each pulse by an amount that was equal to the original minimum length of the pulses. The net effect of all the pulse handling explained above is that the leading edge of each feedback pulse (if longer than said minimum length) causes the driver and latch block 306 to start a switching pulse to the pre-regulator 307 and the trailing edge of the feedback pulse causes the driver and latch block 306 to end the switching pulse. In other words, the pre-regulator 307, which itself acts as a switched-mode power supply, receives pulse width modulated switching pulses at a frequency that is either the same as or two times that of the feedback pulses picked up by the pickup winding 320 and at a duty cycle that is slightly lower than that of the feedback pulses. Doubling the feedback pulse frequency is possible simply by inverting the negative part of the AC-type feedback pulse signal, which is symmetrical with respect to ground.

An interesting question arises if one uses symmetrically alternating pulse width modulated feedback pulses at the feedback transformer so that every nth, (n+2)th etc. pulse occurs above a zero level and every (n+1)th, (n+3)th etc. pulse occurs below the zero level where n is an integer. Should one use all pulses for driving the pre-regulator 307 or only one half of them, e.g. the positive ones? In the experimental coupling only the positive ones were first used; the discrimination was accomplished by only recognizing the rising and falling edges of the positive pulses in the thresholding block 323. Such a choice actually lowers the duty cycle used to drive the pre-regulator 307 to one half of that of the feedback pulses. This fact has to be taken into account in dimensioning the pre-regulator 307 and the resonant switched-mode power supply 308: it is simple as such to define the component values and other dimensioning factors so that each given duty cycle at the feedback transformer is mapped into a corresponding rate of transferring energy over the power transformer. The above-mentioned simple feedback pulse frequency doubling scheme in turn means that again the pre-regulator 307 and the resonant switched-mode power supply 308 must be dimensioned accordingly.

Let us now describe the operation of the arrangement shown in fig. 3 during a non-charging state where feedback pulses are not received at the pickup winding 320. This means that although the input of the supply voltage generating block 301 is coupled to a mains supply, a device the battery should be charged has not been brought into the close vicinity of the charger. Several aspects should be taken into account regarding this state. Firstly, energy should not be wasted but all energy-consuming functions should be kept at minimum. Secondly, recovery from the non-charging state to a charging state must occur in a controllable manner the next time when needed. The latter involves e.g. the fact that the pre-regulator 307 must start pre-regulating and the resonant switched-mode power supply 308 must start resonating already when no sufficient feedback is coming through the feedback transformer, and suitable soft-starting must be employed in order to avoid unnecessary and potentially harmful surges of energy at the starting moment.

A non-charging state means that no feedback pulses are received, i.e. the blocks 320-329 at the lower part of fig. 3 are not operative in giving the driver and latch block 306 either ON or OFF commands. Consecutively the pre-regulator 307 is generally not producing an output voltage at all; neither is it drawing energy from the high-voltage supply rail 316. However, the very low frequency clock 302 is operative and sets the switch 312 into an ON state regularly; for example for a period of 10 ms once every second. During these ON periods an auxiliary supply voltage is available at the auxiliary supply voltage rail 314 for the blocks coupled thereto, and so during said ON periods the start oscillator 304 produces switching pulses to the driver and latch block 306. Every such ON period represents an attempt of going into the charging state: for a short period of time the driver and latch block 306 gives - commanded by the start oscillator 304 - switching pulses to the pre-regulator 307, which in turn provides a certain amount of energy to the resonant switched-mode power supply 308 which pumps a kind of probing burst of energy into the magnetic field of the power transformer. Assuming that the non-charging state is to continue, as soon as the switch 312 goes OFF again the auxiliary supply voltage disappears from the auxiliary supply voltage rail 314 and the attempt of going into the charging state dies out.

At the moment when a device the battery of which is to be charged is brought into the immediate vicinity of the charger, the probing bursts start delivering energy to the feedback circuit of the device (not shown in fig. 3). The PWM controller contained therein (not shown in fig. 3) gradually starts to produce feedback pulses that are coupled to the pickup winding 320. When this happens, the feedback pulses that come through the blocks 320-329 must replace the pulses coming from the start oscillator 304 as the ones that control the operation of the driver and latch block 306. This is accomplished so that from the output of the DC amplifier 324 the leading edge of the first proper feedback pulse goes to the delay block 330, where it is first delayed for a while before it causes the controllable switch 331 to couple a control input of the Schmitt trigger block 303 to the ground potential. Said coupling in turn causes the Schmitt trigger block 303 to switch the start oscillator 304 off so that it remains off until no more feedback pulses are received, after which the charging device returns again to the non-charging state described above.

There is another advantageous feature that can be added to the arrangement described above: the detection of sufficient amplitude of the feedback pulses. It is possible that the device the battery of which is to be charged is not placed quite correctly to the slot in the charger, or an illegal object such as a piece of aluminium foil or metallic confetti may fall in between the charger and the device. In such case the charger should not remain in the charging state, because the illegal object may be hampering both the inductive transfer of energy and the proper controlling of the charging operation. As the illegal object is most probably also decreasing the amplitude of the feedback pulses, such a decrease can be used to detect an "illegal object" condition and to trigger a transition to the non-charging state.

One possibility for implementing the detection of an "illegal object" condition is to select a threshold level at a second thresholding block that is driven by a second AC-amplifier without automatic gain control so that attenuated feedback pulses would not suffice to be detected. Said possibility also calls for adding a peak-to-peak detector between the output of such a second AC amplifier and such a second thresholding block. Note that the amplification factor of the AC amplifier 322 involves automatic gain control, so attenuated feedback pulses would not result in attenuated output pulses from the AC amplifier 322. An output from said peak to peak detector could then be used for example to either enable or disable the passing of the feedback pulses further, depending on whether the peak to peak value of the AC amplified feedback signal was found to be sufficient or not.

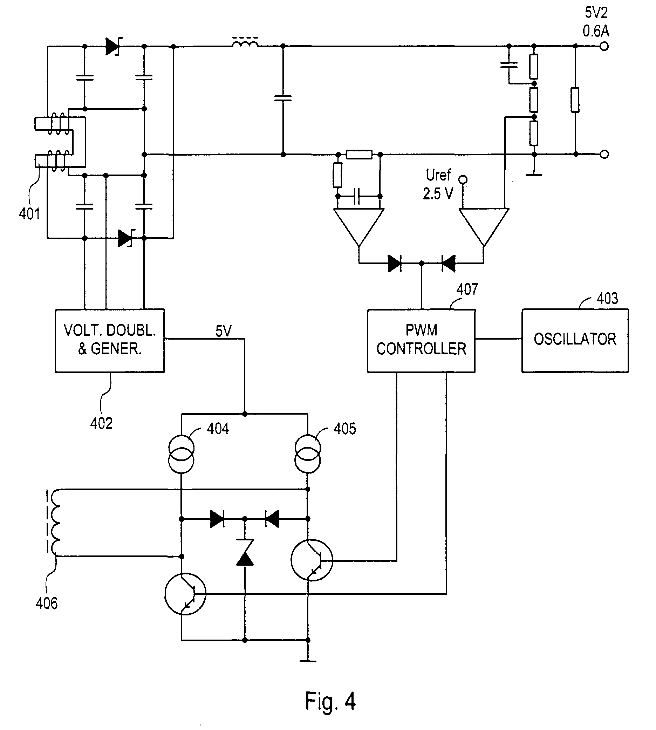

Fig. 4 is an exemplary block diagram of the secondary side, which in our exemplary embodiment is located within the device the battery of which is to be charged. Not all parts of the secondary side need to be discussed in detail. Most importantly there is a secondary power winding 401 that, together with its associated rectifying and filtering circuitry, cyclically discharges energy from the magnetic field of the power transformer. This energy is used, in addition to generating the secondary voltage that is the output voltage of the whole arrangement, in a voltage doubler and stabile auxiliary voltage generator 402 to generate a voltage which is used as the energy source for the pulses that are to be fed into the feedback transformer. As a switching source for these pulses there is the PWM controller 407, the operating frequency of which comes from an associated oscillator 403. The switching pulses themselves do not contain sufficient power to be fed into the feedback transformer, so two constant current sources 404 and 405 that are coupled to the output of the voltage doubler and stabile auxiliary voltage generator 402 are used in series with their associated switching transistors. The bases of the switching transistors receive the switching pulses from the PWM controller 407 at a mutual phase shift of 180 degrees. The signal over the transmitting winding 406 is the difference signal of the phase shifted and pulse width modulated output signals of the PWM controller 407. The couplings to the ends of the transmitting winding 406 of the feedback transformer are from the collectors of the switching transistors.

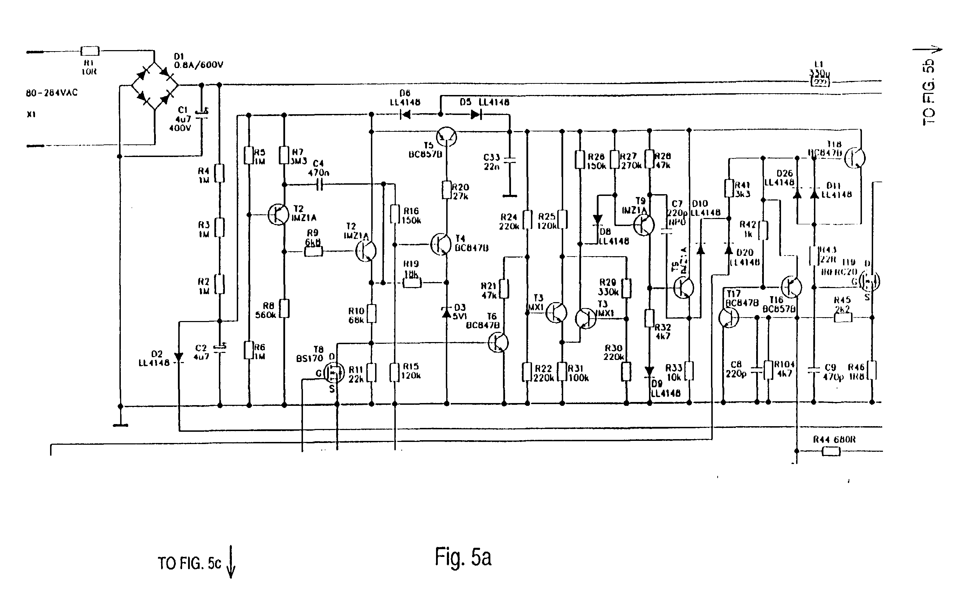

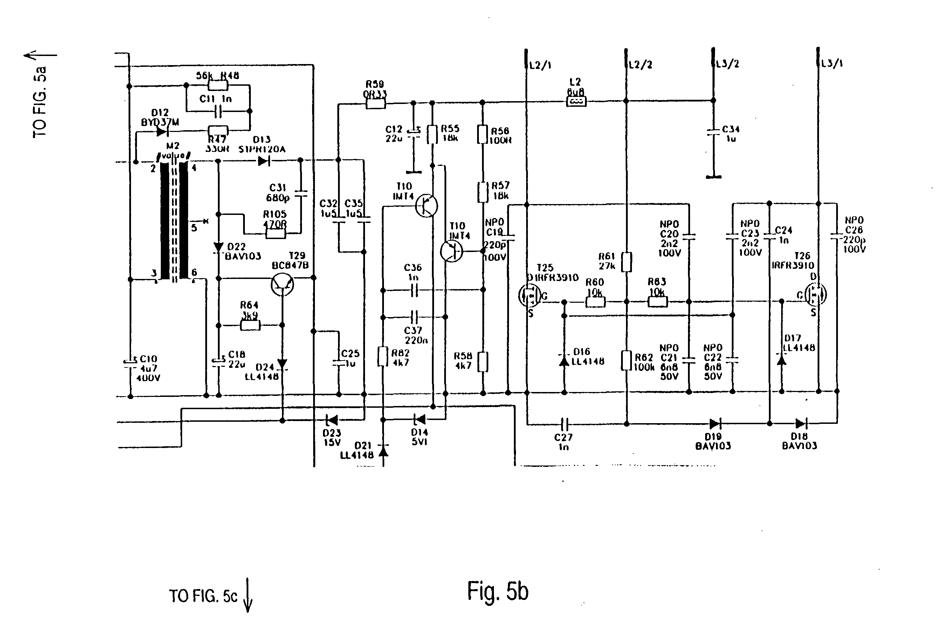

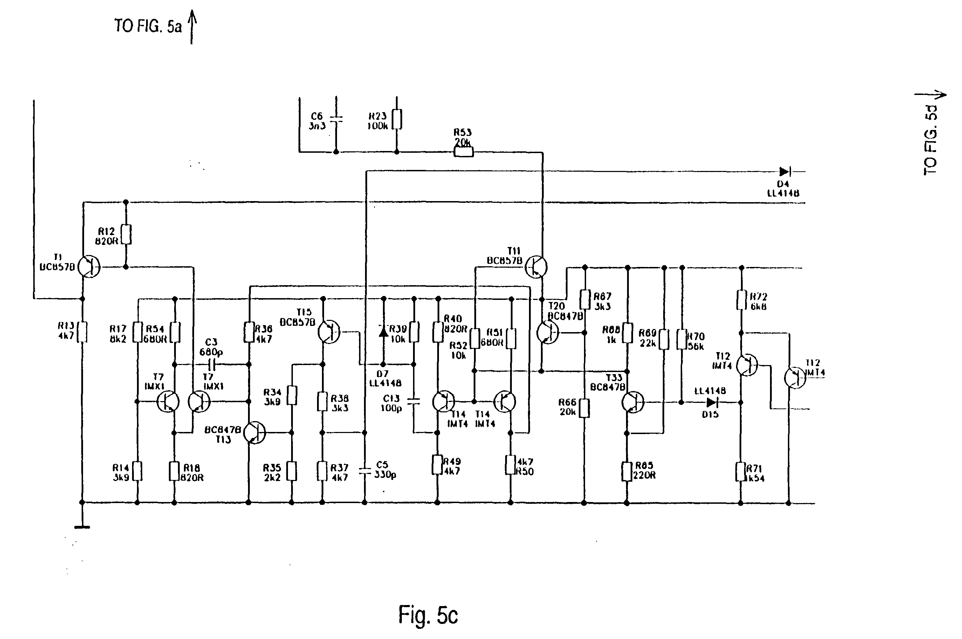

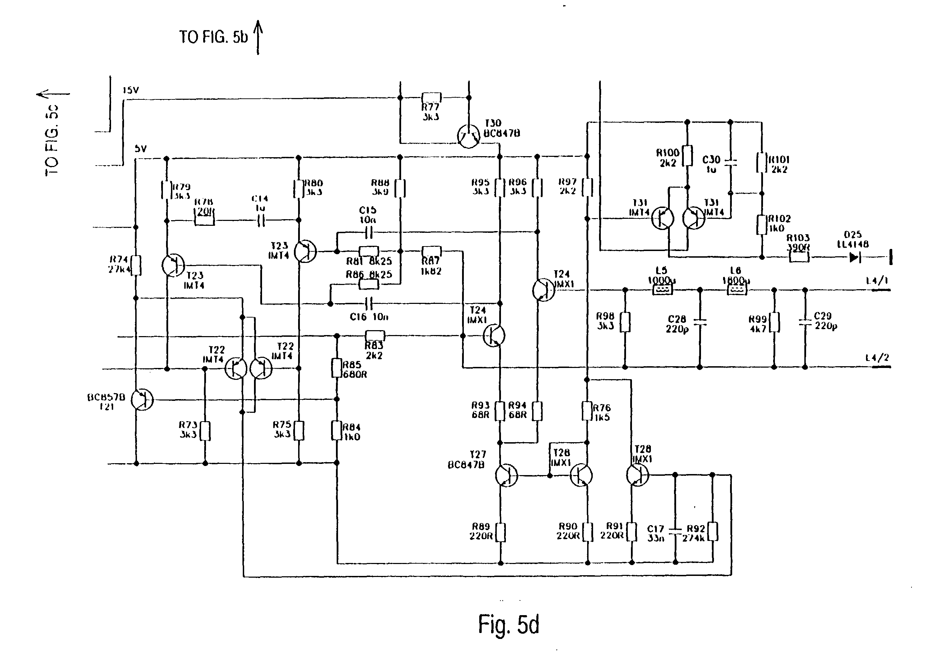

Figs. 5a to 5d illustrate a detailed circuit diagram of the primary side, i.e. the charger side, of a charger that follows the structural principle of fig. 3. However, it has been noted that the circuit diagram is not exactly the optimal solution regarding the detection of an insufficient amplitude of the feedback pulses. The components related to this detection are the double transistor T31, resistors R100 = 2k2, R101 = 2k2, R102 = 1k, R103 = 390R, the diode D25 = 4148 and capacitor C30 = 1uF. The collector of the right-hand T31 delivers an on-current to the latch transistor T16, if the received PWM-signal is so soft that T22 delivers no control current and the shunt transistor T28 (the right-hand one) is off and both T24's are working with maximum DC current, which causes maximum amplification of this preamplifier. So far there is nothing wrong with the circuit. Also a soft Schmitt-Trigger characteristic of this detection circuit is quite correct. But it has been found that this circuit also tends to stop the starting-up procedure. This is mainly due to the value of C30 = 1uF, which was selected in order to obtain a delay of the activity of this minimum value detection circuit. But a calculation has later shown that the time constant of C30 with R101, R102 and R 103 is too small. A more appropriate solution would be to use a flip-flop in combination with the drain voltage of the T8 = BS170, the task of which is to stop the start-up oscillator. The inventor has made a test in which transistors T8 and T11 were replaced with a latch that is arranged to shut down the output of the start oscillator with only rather small delay. The results of the test show that there is no voltage overshoot at the output, neither at maximum input voltage nor at zero load, or even at both these conditions active simultaneously.

Increasing the feedback pulse frequency towards 200 kHz and/or decreasing the resonance frequency of the resonant switched-mode power supply towards 1 MHz means that certain changes must be made in the circuit diagram of figs. 5a to 5d. The resonance capacitors that relate to the resonance frequency of the resonant switched-mode power supply on both the primary and the secondary side must be increased in capacitance in order to decrease the frequency. The component values that set the pulse frequency of the feedback pulse generator on the secondary side must be selected appropriately. Such dimensioning of circuits belongs to routine workshop modifications of a disclosed principle, and are well within the capability of a person skilled in the art.

It should be noted that the circuit built around transistor T31 for detection of the "illegal object" condition should activate a shutdown circuit only after a sufficient delay which is large in comparison with the time factors involved in the starting procedure but still relatively small compared with the time it takes to cause significant overheating when the "illegal object" condition occurs.

The efficiency of an inductively coupled switched-mode power supply, described in terms of low losses and high relative amount of energy recovered for actual use on the secondary side, is intimately coupled to the coupling coefficient of the power transformer. A simple way to increase the value of the coupling coefficient is to bring the halves of the power transformer closer to each other. In our example regarding a portable electronic device placed into a receptive socket of a charger it would be very advantageous if the devices could be mechanically designed so that they include the halves of the power transformer very close to their outer surface, so that when the portable electronic device is placed into the receptive socket, the physical separation of the transformer halves is as small as possible.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

## Claims

1. A power supply arrangement comprising:
- a primary side and a secondary side,
- a power transformer (204) between the primary side and the secondary side,
- on the primary side switching means (203) that are arranged to repeatedly switch, at a certain frequency, an electric current coupled into the power transformer (204) for cyclically transferring energy from the primary side to the secondary side at said certain frequency,
- a wireless feedback link (207) between the primary side and the secondary side,
- on the secondary side feedback pulse generating means (206) for generating feedback pulses at a certain frequency to be transferred from the secondary side to the primary side over the wireless feedback link (207) and
- on the primary side means (209, 202) for utilizing the feedback pulses in controlling the rate at which energy is transferred from the primary side to the secondary side;
**characterised in that** the feedback pulse generating means (206) are arranged to generate the feedback pulses at a frequency that is different from the frequency used by the switching means (203) at the primary side to repeatedly switch an electric current coupled into the power transformer (204).

2. A power supply arrangement according to claim 1, **characterised in that** it comprises on the primary side a filter (208, 321) coupled between the wireless feedback link (207, 320) and the means (209, 202, 306, 307) for utilizing the feedback pulses in controlling the rate at which energy is transferred from the primary side to the secondary side, wherein said filter (208, 321) is arranged to pass the frequency of the feedback pulses and to reject the frequency used by the switching means (203, 308) at the primary side to repeatedly switch an electric current coupled into the power transformer (204, 309, 310).

3. A power supply arrangement according to claim 2, **characterised in that** said filter (208, 321) is arranged to pass, in addition to the frequency of the feedback pulses, certain harmonics of the frequency of the feedback pulses in order to pass on the feedback pulses in a certain shape.

4. A power supply arrangement according to claim 3, **characterised in that** it comprises a thresholding block (323) that is coupled to said filter (321) and arranged to enhance said certain shape of the feedback pulses.

5. A power supply arrangement according to claim 1, **characterised in that** the feedback pulse generating means (206, 103, 403) are arranged to generate the feedback pulses at a frequency that is essentially smaller than the frequency used by the switching means (203, 308) at the primary side to repeatedly switch an electric current coupled into the power transformer (204, 309, 310).

6. A power supply arrangement according to claim 5, **characterised in that** the frequency of the feedback pulses is less than 1/6^{th} part of the frequency used by the switching means (203, 308) at the primary side to repeatedly switch an electric current coupled into the power transformer (204, 309, 310).

7. A power supply arrangement according to claim 1, **characterised in that**
- the power transformer (204) comprises a first half (309, 310, 311) and a second half (401),
- said first half comprises a U-core (311) having two legs,
- said second half comprises a U-core (401) having two legs that are arranged to face the two legs of the U-core (311) of said first half at a certain distance, and
- each leg of each U-core (311, 401) has a winding wound around it.

8. A power supply arrangement according to claim 7, **characterised in that** said distance at which the two legs of the U-core (401) of said second half are arranged to face the two legs of the U-core (311) of said first half is essentially 2.6 millimetres.

9. A power supply arrangement according to claim 1, **characterised in that** the wireless feedback link (207) comprises a feedback transformer (320, 406) with a first winding (406) that belongs to the secondary side and a second winding (320) that belongs to the primary side.

10. A power supply arrangement according to claim 9, **characterised in that** each of said first (406) and second (320) windings is wound as a cylindrical coil around a ferrite rod, so that the ferrite rod around which the second winding (320) is wound is arranged to be parallel to the ferrite rod around which the first winding (406) is wound with a certain orthogonal axial displacement between them.

11. A power supply arrangement according to claim 10, **characterised in that** said orthogonal axial displacement is in the range of 3 to 12 millimetres.

12. A power supply arrangement according to claim 1, **characterised in that**
- the power transformer (204) comprises a first half and a second half,
- said first half comprises an E-core having two peripheral legs and a center leg,
- said second half comprises an E-core having two peripheral legs and a center leg that are arranged to face the two peripheral legs and center leg of the E-core of said first half at a certain distance, and
- each leg of each E-core has a winding wound around it so that the windings wound around the peripheral legs belong to the power transformer and the windings wound around the center legs belong to the wireless feedback link (207).

13. A power supply arrangement according to claim 1, **characterised in that** it comprises on the primary side
- a pre-regulating entity (202, 306, 307) that is arranged to repeatedly switch, at a certain frequency, an electric current in order to produce a pre-regulated voltage,
- a coupling from said pre-regulating entity (202, 306, 307) to the switching means (203, 308) that are arranged to repeatedly switch, at a certain frequency, an electric current coupled into the power transformer (204, 309, 310), for feeding said pre-regulated voltage into the switching means (203, 308), and
- a coupling from the wireless feedback link (207, 320) to said pre-regulating entity (202, 306, 307) for coupling the feedback pulses to said pre-regulating entity (202, 306, 307);
wherein said pre-regulating entity (202, 306, 307) is arranged to produce a pre-regulated voltage the value of which corresponds to certain information carried by the feedback pulses.

14. A power supply arrangement according to claim 13, **characterised in that** said pre-regulating entity (202, 306, 307) is arranged to produce a pre-regulated voltage the value of which corresponds to a duty cycle of the feedback pulses.

15. A battery charger comprising:
- a primary winding (309, 310) of a power transformer,
- switching means (308) that are arranged to repeatedly switch, at a certain frequency, an electric current coupled into the primary winding (309, 310) for cyclically transferring energy from the primary side to a secondary side, located elsewhere than within the battery charger, at said certain frequency,
- a wireless feedback receiving arrangement (320) for receiving feedback pulses at a certain frequency from a secondary side located elsewhere than within the battery charger and
- means (306, 307) for utilizing the received feedback pulses in controlling the rate at which energy is transferred from the primary side to the secondary side located elsewhere than within the battery charger;
**characterised in that** the wireless feedback receiving arrangement (320) is arranged to receive feedback pulses at a frequency that is different from the frequency used by the switching means (308) to repeatedly switch an electric current coupled into the primary winding (309, 310).

16. A battery charger according to claim 15, **characterised in that** it comprises a filter (321) coupled between the wireless feedback receiving arrangement (320) and the means (306, 307) for utilizing the feedback pulses in controlling the rate at which energy is transferred from the primary side to the secondary side located elsewhere than within the battery charger, wherein said filter (321) is arranged to pass the frequency of the feedback pulses and to reject the frequency used by the switching means (308) to repeatedly switch an electric current coupled into the primary winding (309, 310).

17. A battery charger according to claim 16, **characterised in that** said filter (321) is arranged to pass, in addition to the frequency of the feedback pulses, certain harmonics of the frequency of the feedback pulses in order to pass on the feedback pulses in a certain shape.

18. A battery charger according to claim 17, **characterised in that** it comprises a thresholding block (323) that is coupled to said filter (321) and arranged to enhance said certain shape of the feedback pulses.

19. A battery charger according to claim 16, **characterised in that** said filter (321) is a low-pass filter with a cutoff frequency that is lower than the frequency used by the switching means (308) to repeatedly switch an electric current coupled into the primary winding (309, 310).

20. A battery charger according to claim 16, **characterised in that** said filter (321) is a band-pass filter with an upper cutoff frequency that is lower than the frequency used by the switching means (308) to repeatedly switch an electric current coupled into the primary winding (309, 310).

21. A battery charger according to claim 15, **characterised in that** in order to support the primary winding of a power transformer it comprises a U-core (311) having two legs, so that the primary winding of a power transformer consists of two separate windings (309, 310) each of which is wound around a leg of its own in said U-core (311).

22. A battery charger according to claim 15, **characterised in that** the wireless feedback receiving arrangement comprises a second winding (320) of a feedback transformer a first winding of which is located elsewhere than within the battery charger.

23. A battery charger according to claim 22, **characterised in that** said second winding (320) of a feedback transformer is wound as a cylindrical coil around a ferrite rod.

24. A battery charger according to claim 15, **characterised in that**
- it comprises an E-core having two peripheral legs and a center leg, and
- each leg of said E-core has a winding wound around it so that the windings wound around the peripheral legs belong to the primary winding of a power transformer and the winding wound around the center leg belongs to the wireless feedback receiving arrangement.

25. A battery charger according to claim 15, **characterised in that** it comprises a receptive socket for receiving a portable electronic device a battery of which is to be charged, wherein the primary winding (309, 310) of a power transformer and the wireless feedback receiving arrangement (320) are located in the vicinity of said receptive socket in order to enable placing them at a predetermined distance from a secondary winding of a power transformer and wireless feedback transmitting means respectively that are located within said portable electronic device.

26. A battery charger according to claim 15, **characterised in that** it comprises
- a pre-regulating entity (306, 307) that is arranged to repeatedly switch, at a certain frequency, an electric current in order to produce a pre-regulated voltage,
- a coupling from said pre-regulating entity (306, 307) to the switching means (308) that are arranged to repeatedly switch, at a certain frequency, an electric current coupled into the primary winding (309, 310), for feeding said pre-regulated voltage into the switching means (308), and
- a coupling from the wireless feedback receiving arrangement (320) to said pre-regulating entity (306, 307) for coupling the feedback pulses to said pre-regulating entity (306, 307);
wherein said pre-regulating entity (306, 307) is arranged to produce a pre-regulated voltage the value of which corresponds to certain information carried by the feedback pulses.

27. A battery charger according to claim 26, **characterised in that** said pre-regulating entity (306, 307) is arranged to produce a pre-regulated voltage the value of which corresponds to a duty cycle of the feedback pulses.

28. A battery charger according to claim 15, **characterised in that** the switching means (308) that are arranged to repeatedly switch, at a certain frequency, an electric current coupled into the primary winding (309, 310) comprise a resonant switched-mode power supply.

29. A battery-powered portable electronic device, comprising
- a secondary winding of a power transformer (204),
- rectifying and filtering means (205) that are arranged to cyclically discharge electromagnetic energy coupled into the secondary winding at a certain frequency, anfeledback pulse generating means (206, 103, 403) for generating feedback pulses at a certain frequency to be transferred from the battery-powered portable electronic device to a primary side located elsewhere than within the battery-powered portable electronic device over a wireless feedback link (207),
**characterised in that** the feedback pulse generating means (206, 103, 403) are arranged to generate the feedback pulses at a frequency that is different from the frequency at which the rectifying and filtering means (205) are arranged to cyclically discharge electromagnetic energy from the secondary winding.

30. A battery-powered portable electronic device according to claim 29, **characterised in that** the feedback pulse generating means (206, 103, 403) are arranged to generate the feedback pulses at a frequency that is essentially smaller than the frequency used by the rectifying and filtering means (205) to cyclically discharge electromagnetic energy coupled into the secondary winding.

31. A battery-powered portable electronic device according to claim 30, **characterised in that** the frequency of the feedback pulses is less than 1/6^{th} part of the frequency used by the rectifying and filtering means (205) to cyclically discharge electromagnetic energy coupled into the secondary winding.

32. A battery-powered portable electronic device according to claim 29, **characterised in that** in order to support the secondary winding of a power transformer it comprises a U-core (401) having two legs, so that the secondary winding of a power transformer consists of two separate windings each of which is wound around a leg of its own in said U-core (401).

33. A battery-powered portable electronic device according to claim 29, **characterised in that** it comprises a wireless feedback transmitting arrangement with a first winding (406) of a feedback transformer a second winding of which is located elsewhere than within the battery-powered portable electronic device.

34. A battery-powered portable electronic device according to claim 33, **characterised in that** said first winding (406) of a feedback transformer is wound as a cylindrical coil around a ferrite rod.

35. A battery-powered portable electronic device according to claim 29, **characterised in that**
- in order to support the secondary winding of a power transformer it comprises an E-core having two peripheral legs and a center leg, and
- each leg of said E-core has a winding wound around it so that the windings wound around the peripheral legs belong to the secondary winding of a power transformer and the winding wound around the center leg belongs to a wireless feedback transmitting arrangement.

36. A battery-powered portable electronic device according to claim 29, **characterised in that** it comprises a connecting portion arranged to fit into a receptive socket in a battery charger, wherein the secondary winding of a power transformer (204) and a wireless feedback transmitting arrangement (406) comprised by the battery-powered portable electronic device are located within said connecting portion in order to enable placing them at a predetermined distance from a first winding of a power transformer and wireless feedback receiving means respectively that are located within said battery charger.

37. A method for controlling the operation of a power supply arrangement, comprising the steps of:
- repeatedly switching (203), at a certain frequency, an electric current coupled into a power transformer (204) for cyclically transferring energy from a primary side to a secondary side at said certain frequency,
- generating (296), within the secondary side, feedback pulses at a certain frequency to be transferred from the secondary side to the primary side over a wireless feedback link (207),
- on the primary side utilizing (208, 202) the feedback pulses in controlling the rate at which energy is transferred from the primary side to the secondary side;
**characterised in that** the feedback pulses are generated a frequency that is different from the frequency used to repeatedly switch (203) an electric current coupled into the power transformer (204).

38. A method according to claim 37, **characterised in that** the step of utilizing the feedback pulses in controlling the rate at which energy is transferred from the primary side to the secondary side comprises the substeps of:
- filtering and pulse shaping (208) the feedback pulses transferred over the wireless feedback link (207), wherein the filtering is arranged to reject the frequency at which the electric current coupled into a power transformer is repeatedly switched,
- using the filtered and pulse shaped pulses to control the generation of a pre-regulated voltage (202) and
- using said pre-regulated voltage as the source for the repeatedly switched electric current (203) coupled into a power transformer (204).
